# EUROPÄISCHE PATENTSCHRIFT

(11) **EP 2 110 402 B1**
(45) Veröffentlichungstag und Bekanntmachung des Hinweises auf die Patenterteilung: **05.12.2012**
(21) Anmeldenummer: 08007332.3
(22) Anmeldetag: 14.04.2008
(51) Int. Cl.: C08J 5/06, C09J 161/12, C09J 163/04

(54) **Haftmittelformulierung sowie Verfahren zur Behandlung von Verstärkungseinlagen**
Adhesive formula and method for treating reinforcement inlays
Formule d'agent adhésif et procédé de traitement d'inserts de renfort

(43) Veröffentlichungstag der Anmeldung: 21.10.2009
(73) Patentinhaber: EMS-PATENT AG, 7013 Domat/Ems (CH)
(72) Erfinder: Kurz, Günter, CH-7015 Tamins (CH)
(74) Vertreter: Pfenning, Meinig & Partner GbR

(56) Entgegenhaltungen:
- EP-A- 1 221 456
- EP-A- 1 270 799
- WO-A-2007/051562

## Beschreibung

Die Erfindung betrifft eine neuartige Haftmittelformulierung zur Behandlung von Verstärkungseinlagen, die zur Herstellung von verstärkten Polymerprodukten vorgesehen sind, wobei die Haftmittelformulierung einen Bisphenol-A-Epoxy-Novolak enthält.

Die Verstärkungseinlagen werden zum Beispiel in Form von Fasern, Garnen, Cord, Geweben oder Gewirken verwendet.

Bei der Herstellung von faserverstärkten Gummiprodukten oder von Produkten aus faserverstärkten thermoplastischen Kautschuk hat es sich als günstig erwiesen, wenn zur Verbesserung der Haftfestigkeit zwischen textiler Verstärkungseinlage und dem Kautschuk ein Haftvermittler eingesetzt wird. Wichtig ist der Einsatz eines derartigen Haftvermittlers insbesondere im Bereich von Reifencord und anderen hochbelasteten Verbundwerkstoffen mit Verstärkungsfasern. Insbesondere für dieses Anwendungsgebiet ist es aus dem Stand der Technik bekannt, Resorcin-Formaldehyd-Latexsysteme (RFL) zur Verbindung von synthetischen Fasern zu Gummiprodukten einzusetzen.

Es kann dabei entweder in einem Einschritt- oder in einem Zweischrittverfahren vorgegangen werden. In der Praxis hat es sich gezeigt, dass im Wesentlichen insbesondere bei nicht aktivierten Polyesterfasern nur das Zweischrittverfahren zu befriedigenden Ergebnissen führt. Beim Zweischrittverfahren wird in einer ersten Stufe zuerst eine Aktivierung der Fasern in der Weise vorgenommen, dass diese mit Epoxid und/oder mit Isocyanat beschichtet werden. Dies wird im Regelfall mit einer wässrigen Dispersion erreicht, bei der das Isocyanat und/oder das Epoxid mit einem bestimmten Festkörpergehalt in der wässrigen Dispersion enthalten ist. Nachgelagert zu dieser ersten Stufe wird dann in einer zweiten Stufe die Beschichtung mit einem Resorcin-Formaldehyd-Latexsystem vorgenommen. Durch dieses Zweischrittverfahren wird sichergestellt, dass im ersten Schritt eine vollständige Aktivierung der Fasern in der Weise erfolgt, dass die Beschichtung mit Epoxid und/oder mit Isocyanat zur Bildung von aktiven funktionsfähigen Gruppen an der Oberfläche der Faser führt, so dass dann mit der zweiten Stufe die Behandlung mit dem Latex erfolgen kann. Die Behandlung mit RFL erfolgt ebenfalls mit einer wässrigen Dispersion.

Das Zweischrittverfahren ist jedoch verfahrenstechnisch aufwendig und auch die Bereitstellung von zwei getrennten Dispersionen und deren Handhabung ist schwierig.

Es hat deshalb nicht an Versuchen gefehlt, die Behandlung in Form eines Einstufenprozesses durchzuführen. Einstufensysteme sind z.B. in der US 2002/0122938 sowie in der US 3,419,450 beschrieben.

Die Einstufensysteme, d.h. die Anwendung einer wässrigen Dispersion mit RFL sowie Epoxid und Isocyanat konnten sich aber in der Praxis noch nicht durchsetzen. Als Nachteile bei derartigen Einstufensystemen, wie sie z.B. auch in dem US-Patent 2002/0122938 beschrieben sind, sind zu nennen, dass die Dispersion nach wenigen Stunden inhomogen wird, zum Beispiel durch Sedimentation oder Flockung, was auch zu einer Änderung der Zusammensetzung führt. Dadurch kommt es zu sinkenden Haftwerten, fleckigen Verstärkungseinlagen, Verstopfung der Vakuumsauglippen oder Belagbildung auf den Transportrollen der Verstärkungseinlage, so dass diese Einstufensysteme nur eine ungenügende Topfzeit aufweisen. Mit Topfzeit wird die Zeitspanne bezeichnet in der die Haftmittelformulierung homogen bleibt und eine gute Haftung erzielt wird und somit problemlos und mit verbesserter Produktivität verwendet werden kann.

Je nach Chargengröße der Beschichtungsanlage werden vom Anwender Topfzeiten von mindestens 6 bis 12 Stunden verlangt.

Aus der EP 1 221 456 A1 ist eine adhäsive Single-Dip-Beschichtungszusammensetzung mit ungefähr 2 bis 12 Gew.-% Epoxidharz und optionalen 1 bis 12 Gew.-% Isocyanat bekannt, die auf einem Resorcinol-Formaldehyd-Latex basiert.

Die EP 1 270 799 A1 beschreibt ein Mittel zur Behandlung von Fasern sowie Glasfaser- und Gummiprodukte, die unter Verwendung dieses Mittels hergestellt werden können.

Ausgehend hiervon ist es deshalb die Aufgabe der vorliegenden Erfindung, eine Haftmittelformulierung, die in Form eines Einstufensystems angewandt werden kann, vorzuschlagen, wobei die Haftmittelformulierung eine Topfzeit aufweisen soll, mindestens 6 Stunden beträgt. Die Haftmittelformulierung soll zusätzlich eine gute Benetzung und gute Haftung auf den Verstärkungseinlagen, bevorzugt auf Polyester-Verstärkungseinlagen, insbesondere auf PET-Verstärkungseinlagen, aufweisen, wobei die Verstärkungseinlagen aktiviert oder nicht aktiviert sein können. Eine weitere Aufgabe der vorliegenden Erfindung ist es, ein Verfahren zur Behandlung von Verstärkungseinlagen, insbesondere Reifencord, Transportcord oder Keilriemencord zur Herstellung von verstärkten Polymerprodukten anzugeben. Die verstärkten Polymerprodukte besitzen eine gute Haftung zwischen Verstärkungseinlage und Matrix, z.B. Gummi oder thermoplastischer Kautschuk bzw. thermoplastische Elastomeren.

Diese Aufgabe wird in Bezug auf die Haftmittelformulierung durch die Merkmale des Patentanspruches 1 und in Bezug auf das Verfahren durch die Merkmale des Patentanspruches 12 gelöst.

Erfindungsgemäß wird somit eine Haftmitteldispersion für ein Einstufensystem zur Behandlung von Verstärkungseinlagen zur Herstellung von verstärkten Polymerprodukten vorgeschlagen, bei der neben dem Isocyanat und dem Resorcin-Formaldehyd-Latex (RFL) als Epoxid ein ausgewähltes Epoxid, nämlich Bisphenol-A-Epoxy-Novolak in Form eines Festkörpers, in der Formulierung enthalten ist.

Die Anmelderin konnte zeigen, dass es mit einer derart spezifisch ausgewählten Formulierung möglich ist, die Topfzeit auf mindestens 6 Stunden, bevorzugt auf mindestens 24 Stunden, besonders bevorzugt mindestens 48 Stunden, ganz besonders bevorzugt auf mindestens 70 Stunden, insbesondere auf mindestens 100 Stunden zu verlängern. Überraschenderweise wurde festgestellt, dass auch bei einer derart verlängerten Topfzeit gute Haftungswerte erreicht werden.

Weitere Vorteile den erfindungsgemäßen Haftmittelformulierungen sind ihre Sedimentations- und Flockungsfreiheit, gleichmäßige Beschichtungsdicke, fleckenfreie Verstärkungseinlage und keine Belagbildung auf den Transportrollen der Verstärkungseinlagen. Mit den erfindungsgemäßen Haftmittelformulierungen wird außerdem eine "Retarded Cord Penetration (RCP)" erreicht, also ein verzögertes Eindringen der Haftformulierung in die Verstärkungseinlage, was zu einem verringertem Verlust an Haftmittelformulierung und einer flexibleren Verstärkungseinlage führt.

Die erfindungsgemäße Haftmittelformulierung eignet sich zur Aufbringung einer Beschichtungsmenge von 2 - 8 Gew.-%, bezogen auf die Verstärkungseinlage. Und zwar ist es möglich diese Menge in einem einzigen Beschichtungsschritt aufzubringen. Unter 2 Gew.-% ist die Beschichtung so dünn, dass eine lückenlose Beschichtung nicht mehr gewährleistet ist. Über 8 Gew.-% hingegen kommt es aufgrund der hohen Dicke der Beschichtung zu Schwankungen in deren Gleichmäßigkeit.

Beschichtet wird bevorzugt Cord, besonders bevorzugt Polyester-Cord, ganz besonders bevorzugt PET-Cord, wobei der Cord aktiviert oder nicht aktiviert sein kann.

Wesentliches Element der vorliegenden Erfindung ist somit die Auswahl des spezifischen Epoxids in Form des Bisphenol-A-Epoxy-Novolaks mit der angegebenen Gewichtsmenge. Novolake sind säurekatalytisch hergestellte Polykondensationsprodukte aus Formaldehyd und Phenolen, d.h. hier im vorliegenden Falle aus Formaldehyd und Bisphenol A. Die Einführung der Epoxygruppe wird durch Reaktion mit Epichlorhydrin erreicht.

Bevorzugt werden Bisphenol-A-Epoxy-Novolake eingesetzt, die ein Epoxidequivalent von 190 bis 240 g/eq, besonders bevorzugt von 195 bis 230 g/eq, eine Epoxidfunktionalität von 3 bis 10, besonders bevorzugt von 8 und einen Erweichungspunkt von 70 bis 90 °C, besonders bevorzugt von 80 °C aufweisen.

Das Epoxidequivalent wird nach DIN EN ISO 3001 bestimmt. Die Messung des Erweichungspunktes erfolgt auf der Kofflerbank oder durch Bestimmung der Vicat Erweichungstemperatur nach DIN 53 462.

Neben der Auswahl des Bisphenol-A-Epoxy-Novolaks ist es für die vorliegende Erfindung wesentlich, dass dieser in einer Menge von 1 bis 20 Gew.-%, bezogen auf 100 Gew.-% Festkörper eingesetzt wird. Überraschenderweise konnte dabei die Anmelderin auch zeigen, dass sehr gute Ergebnisse, d.h. Topfzeiten von mindestens 6 Stunden auch dann erreicht werden, der Bisphenol-A-Epoxy-Novolak in einer Menge von 4 bis 19 Gew.-%, besonders bevorzugt in einer Menge von 12,5 bis 18 Gew.-% bezogen auf 100 Gew.-% Festkörper eingesetzt wird. Das Isocyanat, das ebenfalls als Festkörper in der Dispersion vorliegt, wird in einer Menge von 4 bis 20 Gew.-%, bevorzugt 4 bis 19 Gew.-%, besonders bevorzugt 12,5 - 18 Gew.-% bezogen auf 100 Gew.-% Festkörper verwendet. Der Resorcin-Formaldehyd-Latex wird so eingesetzt, dass er in einer Menge von 60 bis 92 Gew.-%, bevorzugt 62 - 92, besonders bevorzugt 64 - 75 Gew.-% bezogen auf 100 Gew.-% Festkörper zum Festkörper beiträgt.

In einer bevorzugten Ausführungsform der erfindungsgemäßen Haftmittelformulierung liegt das Gewichtsverhältnis von Komponente a) Bisphenol-A-Epoxy-Novolak zu Komponente b) Isocyanat im Bereich von 60 zu 40 bis 40 zu 60. Besonders bevorzugt beträgt dieses Gewichtsverhältnis 50 zu 50.

Die Haftmittelformulierung nach der Erfindung weist einen Festkörpergehalt von 10 bis 40 Gew.-%, bevorzugt von 10 bis 30 Gew.-%, besonders bevorzugt 15 bis 30 Gew.-%, ganz besonders bevorzugt 18 bis 27 Gew.-% auf. Gemäß der vorliegenden Erfindung ist die mittlere Partikelgröße der in der Dispersion vorliegenden Teilchen < 5 µm.

Bei der Haftmittelformulierung hat es sich weiterhin als vorteilhaft erwiesen, wenn als Isocyanate 4-4-diisocyanatdiphenylmethan (MDI) und/oder Tuluoldiisocyanat (TDI) und/oder Naphthylisocyanat (NDI) verwendet werden. Die Erfindung umfasst aber selbstverständlich auch alle anderen bekannten Isocyanate, die für derartige Haftvermittlerformulierungen eingesetzt werden können. Hierzu wird beispielhaft auf die US 2002/0122938 A1 und die dort beschriebenen Diisocyanate verwiesen.

Als günstiges Blockierungsmittel haben sich bei den Isocyanaten, bei der vorliegenden Erfindung, insbesondere lactamblockierte Isocyanate erwiesen. Beispiele hierfür sind ε-copralactam, d-Valerolactam. Die Erfindung umfasst aber selbstverständlich auch andere bekannte Blockierungsmittel. Diese sind: Oxime, z.B. Methyl-Ethyl-Ketoxim (Butanon-Oxim), Methyl-Amyl-Ketoxim und Cyclohexanon-Oxim. Monophenole,

z.B. Phenol, Resorcin, Kresol, Trimethylphenole, tert. Butylphenole. Primäre, sekundäre und tertiäre Alkohole, Glykolether, leicht enol-bildende Verbindungen, wie z.B. Acetoessigester, Acetylaceton, Malonsäurederivate. Sekundäre aromatische Amine. Imide, Mercaptane, Triazole.

Eine weitere Steigerung der Reaktionsgeschwindigkeit bei der erfindungsgemäßen Haftmittelformulierung kann noch dadurch erreicht werden, dass ein Katalysator in Form einer Metallverbindung zugesetzt wird. Als Katalysator eignen sich dabei Metallverbindungen der Metalle Natrium, Kalium, Cäsium, Strontium, Silber, Cadmium, Barium, Cer, Uran, Titan, Chrom, Zinn, Antimon, Mangan, Eisen, Kobalt, Nickel, Kupfer, Zink, Blei, Calzium und/oder Zirkon. Bevorzugt sind bei den Metallverbindungen diejenigen des Zinks. Geeignete Verbindungen sind hierbei Zinkacetat, Zinksulfat, Zinkcarbonat, Zinkoxid, Zinkacetylacetonat, und/oder Zinkchlorid. Ganz besonders bevorzugt ist Zinkacetat.

Der Katalysator liegt in gelöster Form in der Dispersion vor, wobei die Konzentration 0.0001 bis 0.1 mol/kg der Formulierung beträgt.

Das gemäß der vorliegenden Erfindung verwendete Resorcin-Formaldehyd-Latexsystem (RFL) ist an und für sich aus dem Stand der Technik bekannt.

Die Erfindung betrifft weiterhin ein Verfahren zur Behandlung von Verstärkungseinlagen zur Herstellung von verstärkten Polymerprodukten (Patentanspruch 12). Beim erfindungsgemäßen Verfahren wird eine wie vorstehend beschriebene Haftmittelformulierung eingesetzt. Dabei kann die Haftmittelformulierung kurz vor der vorgesehenen Anwendung durch Mischen der einzelnen Komponenten hergestellt werden. Die Komponenten a) Bisphenol-A-Epoxy-Novolak und b) Isocyanat können aber auch lange Zeit vor der Anwendung schon vorgemischt werden.

Wesentlich bei der vorliegenden Erfindung ist es jedoch, dass die Haftmittelformulierung in Form eines Einstufensystems angewandt wird, d. h. alle Komponenten müssen vor der Beschichtung der Verstärkungseinlagen in einer einzigen wässrigen Dispersion vorliegen.

Die Anmelderin konnte weiterhin zeigen, dass die erfindungsgemäße Haftmittelformulierung besonders geeignet ist für die Beschichtung von Verstärkungseinlagen aus nicht aktiviertem Polyestercord, insbesondere nicht aktivierten PET-Cord. Hierbei konnten Topfzeiten von mindesten 6 Stunden erreicht werden und gleichzeitig ausgezeichnete Reaktionsgeschwindigkeiten, die deutlich über denen liegen, wie Sie bisher von vergleichbaren Systemen bekannt waren.

Die Erfindung wird nachfolgend anhand eines Beispiels sowie eines Vergleichsbeispiels näher erläutert.

Dabei werden folgende Materialien verwendet:
Cresol-Epoxy-Novolak:
   ECN-1400 der Firma Ciba
      Bisphenol-A-Epoxy-Novolak mit einem Epoxidequivalent von 210 g/eq, einer Funktionalität von 8 und einem Erweichungspunkt von 80 °C.
Geblocktes Isocyanat:
   Grilbond IL-6 der Firma EMS-PRIMID
      RFL:
      Deionisiertes Wasser 434 Teile
      Styrol-butadien-vinylpyridin-Latex (Festkörperanteil 41 Gew.-%) 483 Teile,
      Resorcin 22 Teile,
      Formaldehyd (37 Gew.-%-ig) 32 Teile,
      Natriumhydroxid 0,6 Teile,
      Ammoniumhydroxid (25 Gew.-%) 25 Teile.
      In einem ersten Gefäß wird deionisiertes Wasser vorgelegt und nacheinander unter Rühren Natriumhydroxyd, Resocin und Formaldehyd zugegeben. Diese Mischung wird 6 Stunden bei 25 °C gerührt.
      In einem zweiten Gefäß wird der Styrol-butadien-vinylpyridin-Latex vorgelegt, mit dem Ammoniumhydroxyd versetzt und der Mischung aus dem ersten Gefäß hinzugegeben. Während der ganzen Zeit und für weitere 17 Stunden wird gerührt. Es resultiert ein RFL mit etwa 23 Gew.-% Feststoff.

### 1) Vergleichsbeispiel

Es wurde eine Dispersion mit der folgenden Zusammensetzung des Feststoffanteils hergestellt:

| | | |
|---|---|---|
| 14,5 | Gew.-% | ECN-1400 |
| 14,5 | Gew.-% | Grilbond IL-6 |
| 71 | Gew.-% | RFL. |

Dazu wurden in einem Gefäß 121 Teile deionisiertes Wasser vorgelegt und nacheinander 805 Teile RFL und 37 Teile ECN-1400 und 37 Teile Il-6 unter Rühren zugegeben und anschließend noch weitere 15 Minuten bei 25 °C gerührt.

### 2) Erfindungsgemäßes Beispiel

Es wurde eine Dispersion mit der folgenden Zusammensetzung des Feststoffanteils hergestellt: 14,5 Gew.-% Bisphenol-A-Epoxy-Novolak,
14,5 Gew.-% Grilbond IL-6,

71 Gew.-% RFL. Dazu wurden in einem Gefäß 121 Teile deionisiertes Wasser vorgelegt und nacheinander 805 Teile RFL und 37 Teile Bisphenol-A-Epoxy-Novolak und 37 Teile Il-6 unter Rühren zugegeben und anschließend noch weitere 15 Minuten bei 25 °C gerührt.

Mit den Formulierungen 1) und 2) wurde der nicht aktivierte Cord Performance Fibers HMLS Polyester, 1100x1x2 dtex, ZS 470, 1X50 mit einem Einstufenprozess auf einer Labor-Dip-Anlage beschichtet. Die Haftungsergebnisse sind in den Figuren 1 (Vergleichsbeispiel) und 2 (erfindungsgemäßes Beispiel) wiedergegeben.

Wie die Untersuchungsergebnisse zeigen, weist nun der Einstufendip nach dem Vergleichsbeispiel, d.h. mit einem Cresol-Epoxy-Novolak, deutlich schlechtere Topfzeiten auf, was sich in einem starken Abfall der Haftung nach 5 Stunden Dipdauer zeigt (Figur 1). Au-βerdem zeigt sich nach 5 Stunden schon ein Bodenbelag in der Beschichtungswanne.

Der in Figur 1 angegebene relative Peelwert wurde dabei gemessen nach ASTM D 4393 mit Continental B458 als Test Gummi.

Hingegen zeigte sich, dass ein erfindungsgemäßer Einstufendip mit einem Bisphenol-A-Epoxy-Novolak selbst nach einer Topfzeit von 70 Stunden und sogar noch nach 100 Stunden eine ausgezeichnete Haftung aufweist. Hierzu wird auf Figur 2 verwiesen, die wiederum die relativen Peelwerte, wie auch in Figur 1, gemessen nach ASTM D 4393 mit Continental B458 als Test Gummi, zeigt. Weder nach 70 Stunden, noch nach 101 Stunden ist Bodenbelag in der Beschichtungswanne feststellbar.

### Figur 1

| Verwendungsdauer der Haftmittelformulierung | Peelwert relativ [%] |
|---|---|
| 1 | 96 |
| 2 | 94 |
| 3 | 96 |
| 4 | 96 |
| 5 | 100 |
| 6 | 85 |
| 8 | 70 |

### Figur 2

| Verwendungsdauer der Haftmittelformulierung | Peelwert relativ [%] |
|---|---|
| 1 | 96 |
| 6 | 94 |
| 24 | 91 |
| 48 | 93-96 |
| 72 | 100 |
| 80 | 100 |
| 101 | 99 |

## Patentansprüche

1. Haftmittelformulierung in Form einer wässrigen Dispersion mit einer mittleren Partikelgröße der in der Dispersion vorliegenden Teilchen von
< 5 µm mit einem Festkörpergehalt von 10 bis 40 Gew.-% bezogen auf die Haftmittelformulierung zur Behandlung von Verstärkungseinlagen, zur Herstellung von verstärkten Polymerprodukten, wobei 100 Gew.-% des Festkörpers
a) 1 bis 20 Gew.-% eines Bisphenol-A-Epoxy-Novolakes,
b) 4 bis 20 Gew.-% eines ganz oder teilweise blockierten Isocyanates,
c) 60 bis 92 Gew.-% eines Resorcin-Formaldehyd-Latex (RFL)
enthalten.

2. Haftmittelformulierung nach Anspruch 1, **dadurch gekennzeichnet, dass** der Festkörpergehalt 10 bis 30 Gew.-%, bevorzugt 15 bis 30 Gew.-%, besonders bevorzugt 18 bis 27 Gew.-%, beträgt.

3. Haftvermittlerformulierung nach Anspruch 1 oder 2, **dadurch gekennzeichnet, dass** der Festkörperanteil a) des Bisphenol-A-Epoxy-Novolakes 4 bis 19 Gew.-% beträgt.

4. Haftvermittlerformulierung nach Anspruch 3, **dadurch gekennzeichnet, dass** der Festkörperanteil a) des Bisphenol-A-Epoxy-Novolakes 12,5 bis 18 Gew.-% beträgt.

5. Haftmittelformulierung nach einem der Ansprüche 1 bis 4, **dadurch gekennzeichnet, dass** die Formulierung 0.0001 bis 0.1 mol/kg einer Metallverbindung als Katalysator ausgewählt aus den Metallen Zink, Strontium, Cadmium, Natrium, Cäsium, Kalium, Silber, Barium, Titan, Chrom, Zinn, Antimon, Mangan, Eisen, Kobalt, Nickel, Cer, Uran, Kupfer, Calzium, Zink, Blei und Zirkon enthält.

6. Haftmittelformulierung nach mindestens einem der Ansprüche 1 bis 5, **dadurch gekennzeichnet, dass** das Isocyanat mit Lactam blockiert ist.

7. Haftmittelformulierung nach mindestens einem der Ansprüche 1 bis 6, **dadurch gekennzeichnet, dass** das Isocyanat ausgewählt ist aus 4,4-Diisocyanat-diphenylmethan (MDI) und/oder Toluoldiisocyanat (TDI) und/oder Naphtyldiisocyanant (NDI).

8. Haftmittelformulierung nach mindestens einem der Ansprüche 1 bis 7, **dadurch gekennzeichnet, dass** sie zusätzlich Additiv- und/oder Dispergiermittel enthält.

9. Haftmittelformulierung nach mindestens einem der Ansprüche 1 bis 8, **dadurch gekennzeichnet, dass** der Festkörperanteil b) des geblockten oder teilgeblockten Isocyanats 4 bis 19 Gew.-% beträgt.

10. Haftmittelformulierung nach mindestens einem der Ansprüche 1 bis 9, **dadurch gekennzeichnet, dass** der Festkörperanteil c) des RFL 62 bis 92 Gew.-% beträgt

11. Haftmittelformulierung nach mindestens einem der Ansprüche 1 bis 10, **dadurch gekennzeichnet, dass** die Topfzeit der Haftmittelformulierung mindestens 6 Std., bevorzugt mindestens 24 Std., besonders bevorzugt mindestens 48 Std., weiter bevorzugt mindestens 70 Std., insbesondere mindestens 100 Std. beträgt.

12. Verfahren zur Behandlung von Verstärkungseinlagen, insbesondere Reifencord, Transportcord und/oder Keilriemencord zur Herstellung von verstärkten Polymerprodukten, **dadurch gekennzeichnet, dass** die Behandlung mit einer Haftmittelformulierung nach mindestens einem der Patentansprüche 1 bis 11 durchgeführt wird.

13. Verfahren nach Anspruch 12, **dadurch gekennzeichnet, dass** die Haftmittelformulierung unmittelbar vor der Behandlung durch Mischen der Einzelkomponenten hergestellt wird.

14. Verfahren nach Anspruch 12, **dadurch gekennzeichnet, dass** die Haftmittelformulierung unmittelbar vor der Anwendung durch Zumischen der Komponente c) (RFL) zu der bereits als Mischung vorliegenden Formulierung mit den Bestandteilen a) und b) hergestellt wird.

15. Verfahren nach mindestens einem der Ansprüche 12 bis 14, **dadurch gekennzeichnet, dass** nicht aktivierte Verstärkungseinlagen, bevorzugt aus Polyester, behandelt werden.

## Claims

1. Adhesive formulation in the form of an aqueous dispersion with an average particle size of the particles present in the dispersion of < 5 µm with a solids content of 10 to 40% by weight relative to the adhesive formulation, for the treatment of reinforcing inserts for the production of reinforced polymer products, 100% by weight of the solids containing
a) 1 to 20% by weight of a bisphenol A epoxy novolak,
b) 4 to 20% by weight of an entirely or partially blocked isocyanate,
c) 60 to 92% by weight of a resorcinol formaldehyde latex (RFL).

2. Adhesive formulation according to claim 1, **characterised in that** the solids content is 10 to 30% by weight, preferably 15 to 30% by weight, particularly preferred 18 to 27% by weight.

3. Adhesive formulation according to claim 1 or 2, **characterised in that** the solids proportion a) of bisphenol A epoxy novolak is 4 to 19% by weight.

4. Adhesive formulation according to claim 3, **characterised in that** the solids proportion a) of bisphenol A epoxy novolak is 12.5 to 18% by weight.

5. Adhesive formulation according to one of the claims 1 to 4, **characterised in that** the formulation contains 0.0001 to 0.1 mol/kg of a metal compound as catalyst selected from the metals zinc, strontium, cadmium, sodium, caesium, potassium, silver, barium, titanium, chromium, tin, antimony, manganese, iron, cobalt, nickel, cerium, uranium, copper, calcium, zinc, lead and zirconium.

6. Adhesive formulation according to at least one of the claims 1 to 5, **characterised in that** the isocyanate is blocked with lactam.

7. Adhesive formulation according to at least one of the claims 1 to 6, **characterised in that** the isocyanate is selected from 4,4-diisocyanate diphenylmethane (MDI) and/or toluene diisocyanate (TDI) and/or naphthyl diisocyanate (NDI).

8. Adhesive formulation according to at least one of the claims 1 to 7, **characterised in that** it contains in addition additive- and/or dispersion agents.

9. Adhesive formulation according to at least one of the claims 1 to 8, **characterised in that** the solids proportion b) of the blocked or partially blocked isocyanate is 4 to 19% by weight.

10. Adhesive formulation according to at least one of the claims 1 to 9, **characterised in that** the solids proportion c) of the RFL is 62 to 92% by weight.

11. Adhesive formulation according to at least one of the claims 1 to 10, **characterised in that** the pot life of the adhesive formulation is at least 6 hours, preferably at least 24 hours, particularly preferred at least 48 hours, further preferred at least 70 hours, in particular at least 100 hours.

12. Method for the treatment of reinforcing inserts, in particular tyre cord, conveyor cord and/or V-belt cord for the production of reinforced polymer products, **characterised in that** the treatment is implemented with an adhesive formulation according to at least one of the patent claims 1 to 11.

13. Method according to claim 12, **characterised in that** the adhesive formulation is produced directly before the treatment by mixing the individual components.

14. Method according to claim 12, **characterised in that** the adhesive formulation is produced immediately before application by mixing component c) (RFL) into the formulation already present as a mixture with the components a) and b).

15. Method according to at least one of the claims 12 to 14, **characterised in that** non-activated reinforcing inserts, preferably made of polyester, are treated.

## Revendications

1. Formulation d'agent liant sous la forme d'une dispersion aqueuse ayant une taille de particule moyenne des particules présentes dans la dispersion < 5 µm et ayant une teneur en matière sèche de 10 à 40 % en poids par rapport à la formulation d'agent liant, pour le traitement d'inserts de renforcement, pour la fabrication de produits polymères renforcés, 100 % en poids de la matière sèche contenant
a) 1 à 20 % en poids d'une novolaque bisphénol A-époxy,
b) 4 à 20 % en poids d'un isocyanate entièrement ou partiellement bloqué,
c) 60 à 92 % en poids d'un latex résorcine-formaldéhyde (RFL).

2. Formulation d'agent liant selon la revendication 1, **caractérisée en ce que** la teneur en matière sèche est de 10 à 30 % en poids, de préférence de 15 à 30 % en poids, de manière particulièrement préférée de 18 à 27 % en poids.

3. Formulation d'agent liant selon la revendication 1 ou 2, **caractérisée en ce que** la proportion de matière sèche a) de la novolaque bisphénol A-époxy est de 4 à 19 % en poids.

4. Formulation d'agent liant selon la revendication 3, **caractérisée en ce que** la proportion de matière sèche a) de la novolaque bisphénol A-époxy est de 12,5 à 18 % en poids.

5. Formulation d'agent liant selon l'une quelconque des revendications 1 à 4, **caractérisée en ce que** la formulation contient 0,0001 à 0,1 mol/kg d'un composé métallique en tant que catalyseur choisi parmi les métaux zinc, strontium, cadmium, sodium, césium, potassium, argent, baryum, titane, chrome, étain, antimoine, manganèse, fer, cobalt, nickel, cérium, uranium, cuivre, calcium, zinc, plomb et zirconium.

6. Formulation d'agent liant selon au moins l'une quelconque des revendications 1 à 5, **caractérisée en ce que** l'isocyanate est bloqué avec du lactame.

7. Formulation d'agent liant selon au moins l'une quelconque des revendications 1 à 6, **caractérisée en ce que** l'isocyanate est choisi parmi le 4,4-diisocyanate-diphénylméthane (MDI) et/ou le diisocyanate de toluène (TDI) et/ou le diisocyanate de naphtyle (NDI).

8. Formulation d'agent liant selon au moins l'une quelconque des revendications 1 à 7, **caractérisée en ce qu'**elle contient en outre des additifs et/ou des dispersants.

9. Formulation d'agent liant selon au moins l'une quelconque des revendications 1 à 8, **caractérisée en ce que** la proportion de matière sèche b) de l'isocyanate bloqué ou partiellement bloqué est de 4 à 19 % en poids.

10. Formulation d'agent liant selon au moins l'une quelconque des revendications 1 à 9, **caractérisée en ce que** la proportion de matière sèche c) du RFL est de 62 à 92 % en poids.

11. Formulation d'agent liant selon au moins l'une quelconque des revendications 1 à 10, **caractérisée en ce que** la vie en pot de la formulation d'agent liant est d'au moins 6 h, de préférence d'au moins 24 h, de manière particulièrement préférée d'au moins 48 h, de manière davantage préférée d'au moins 70 h, notamment d'au moins 100 h.

12. Procédé pour le traitement d'inserts de renforcement, notamment d'une corde de pneus, d'une corde de transport et/ou d'une corde de courroie trapézoïdale pour la fabrication de produits polymères renforcés, **caractérisé en ce que** le traitement est réalisé avec une formulation d'agent liant selon au moins l'une quelconque des revendications 1 à 11.

13. Procédé selon la revendication 12, **caractérisé en ce que** la formulation d'agent liant est fabriquée immédiatement avant le traitement par mélange des composants individuels.

14. Procédé selon la revendication 12, **caractérisé en ce que** la formulation d'agent liant est fabriquée immédiatement avant l'utilisation par mélange du composant c) (RFL) avec la formulation des constituants a) et b) déjà présente sous forme de mélange.

15. Procédé selon au moins l'une quelconque des revendications 12 à 14, **caractérisé en ce que** sont traités des inserts de renforcement non activés, de préférence en polyester.
